# EUROPEAN PATENT SPECIFICATION

(11) **EP 1 012 802 B1**
(45) Date of publication and mention of the grant of the patent: **16.03.2005**
(21) Application number: 99932847.9
(22) Date of filing: 07.07.1999
(51) Int. Cl.: G08B 5/22

(54) **ALPHANUMERIC RADIO PAGER WITH MULTILINE DISPLAY AND SYSTEM OR MESSAGE SELECTIVE ZOOM WITH HORIZONTAL SCROLLING**
ALPHANUMERISCHER FUNKRUFEMPFÄNGER MIT VIELFACHLINIEN-BILDSCHIRM UND SYSTEM ODER NACHRICHTSELEKTIVEM ZOOM MIT HORIZONTALER VERSCHIEBUNG
RECEPTEUR D'APPEL DE RADIOMESSAGERIE NUMERIQUE A ECRAN MULTILIGNE ET SYSTEME AFFERENT OU ZOOM DE SELECTION DE MESSAGES AVEC DEFILEMENT HORIZONTAL

(30) Priority: 20.07.1998 US 119571
(43) Date of publication of application: 28.06.2000
(73) Proprietor: Koninklijke Philips Electronics N.V., 5621 BA Eindhoven (NL)
(72) Inventor: KLEIN, Thomas, NL-5656 AA Eindhoven (NL)
(74) Representative: Deguelle, Wilhelmus Hendrikus Gerardus
(86) International application number: PCT/EP1999/004770
(87) International publication number: WO 2000/005691

(56) References cited:
- EP-A- 0 561 435
- EP-A- 0 646 900
- EP-A- 0 780 819
- EP-A- 0 883 056
- US-A- 5 107 259

## Description

### 1. Field of the Invention

The present invention relates to a device, such as a radio pager, a cellular phone or a a cordless phone for receiving, demodulating and decoding wireless broadcast messages including a series of characters from a predetermined character set, and displaying the message as a few lines on a display. The present invention also relates to such a device wherein messages of different types are broadcast and the device is programmed to recognize one or more addresses or identification codes in extracting message data.

### 2. Description of the Related Art

Radio pagers presently in use have multi-line LCD displays for received text or alphanumeric numeric messages, which displays have a fixed small number of lines, typically two to four lines, each with a fixed width of about 15 to 20 characters. The messages can vary over a wide range in length, ranging from those which fit on one line, such as a telephone number or a stock quote, to long data messages of up to for example 6,400 characters. When a received message contains more characters than can be displayed simultaneously, the message can be advanced line by line to achieve a vertical scrolling of the message.

Further, pagers may receive a plurality of different types of messages as a result of being preprogrammed with a plurality of respective different addresses or identification codes used to extract messages. Typically, the different addresses include an individual address for messages directed exclusively to the specific pager, and thereby to the individual user thereof, one or more group addresses for messages directed to a group of pagers or users, and one or more mail-drop addresses for subscription services of messages pertaining to news, sports, weather, stocks, etc, respectively.

The inventor herein has become aware that users frequently have difficulty in reading displayed messages on a multiline display of a modem pager, due to the relatively small size of the characters.

While the concepts of zooming and panning a display are well known for computer graphics displays, and have also been suggested for personal communicators including graphics displays (see e.g. U.S. Pat. No. 5,615,384 to Allard et al.), such concepts are not generally applicable to radio pagers of a type having only a few lines of display for characters.

EP 0 780 819 A2 describes a selective call receiver with a font data memory for storing message fonts corresponding to different calling number groups.

### SUMMARY OF THE INVENTION

It is an object of the present invention to improve the readability of displayed messages on radio pager having a multiline display mode.

Accordingly, the present invention provides a wireless communication device according to claim 1.

In accordance with the invention the display may be selectively placed by the user in the one-line mode or the multiline mode on a system basis, and/or the mode used to display a message may be adapted automatically in dependence on the nature or source of the message. In order to provide for such automatic adaption of display mode on a message basis, the usual memory means for storing a plurality of different addresses or identification codes with respect to which the pager is authorized to extract associated message data, also stores message configuration information indicating display modes in correspondence with the different addresses or identification codes, and the display controlling means is configured for causing selective display of the extracted message data in a display mode selected in dependence upon the stored message configuration information associated with the address or identification information corresponding to the message containing the message data. In this way, the zoom display mode, or other display mode such as font or character set, can be selected in dependence on the stored message configuration information, allowing for an optimum display mode based upon the source or nature of the message.

Other objects, features and advantages of the present invention will become apparent upon perusal of the following detailed description when taken in conjunction with the appended drawing, wherein:

### BRIEF DESCRIPTION OF THE DRAWING

FIG. 1A is a simplified front view of a radio pager in accordance with the present invention including a display showing an illustrative message in a multiline display mode;
FIG. 1B is a front view of the radio pager which is similar to FIG. 1A except that the display is in a single line display mode and shows a beginning portion of the illustrative message;
FIG. 2 is a schematic block diagram of the circuitry of radio pager of the present invention; and
FIG. 3 is flow chart pertaining to control of the display of a message on the pager carried out by the pager circuitry shown in FIG. 2.

### DETAILED DESCRIPTION OF THE PREFERRED EMBODIMENTS

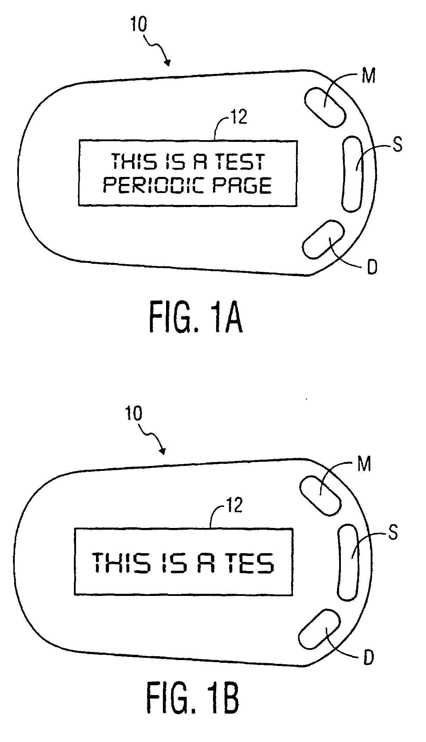

Referring first to FIGS. 1A and 1B of the drawing, a multiline alphanumeric radio pager 10 in accordance with present invention is shown including a rectangular LCD bit mapped display of suitable size and number of pixels consistent with the intended display modes and character sizes. For example, where both two line and single line modes are possible, an illustrative size of display 12 is 1.5 cm high by 4.0 cm wide and about 45 pixels high by 120 pixels wide. Where the multiline mode is more than two lines, such as three or four lines, the height of display 12 would be larger in both dimension and number of pixels. Also shown are a "menu" key M, "select" key S and "do" key D or other suitable assortment of keys provided for the user to actuate in setting user configurable or settable data, features or modes of pager 10, including the display mode, and also used to recall pages or messages and manipulate the view thereof as shown on display 12. Such manipulation of the view includes selectively advancing or scrolling a message which is too long to be seen at one time in the current display mode. Display 12 also typically shows icons (not shown) indicative of the status or number of messages, or which serve as changeable or highlightable objects providing visual feedback when manipulating the aforementioned keys.

In the two line mode shown in Figure 1A, when a monospace font is employed, each character may be 7 pixels high by 5 pixels wide with a one pixel wide separator between adjoining characters and at least a one pixel high separator between adjoining lines. A proportional font could also be employed, in which case the case the indicated character size pertains to the widest characters thereof. Further, for appropriate readability, the text of the message is formatted such that words are not split between lines. If the message were longer than could be displayed simultaneously, the displayed message could be advanced or vertically scrolled two lines at a time in a conventional manner using an appropriate key or key sequence.

In the single line or zoom mode shown in Figure 1B, the characters are larger in both horizontal and vertical dimension than in the two line mode, for example 10 pixels high by 7 pixels wide or 14 pixels high by 10 pixels wide for a monospace font, but the horizontal separators between adjoining characters are preferably maintained at one pixel wide. As will become clearer from the later discussion, in the single line mode either horizontal character by character scrolling or vertical line by line scrolling may be selectively employed to advance a message which is longer than can be displayed at one time. When horizontal scrolling is employed, partial words may at times appear at either or both ends of a line, as illustrated in Figure 1B, but the result is readable since the scrolling is done at a steady user selectable rate.

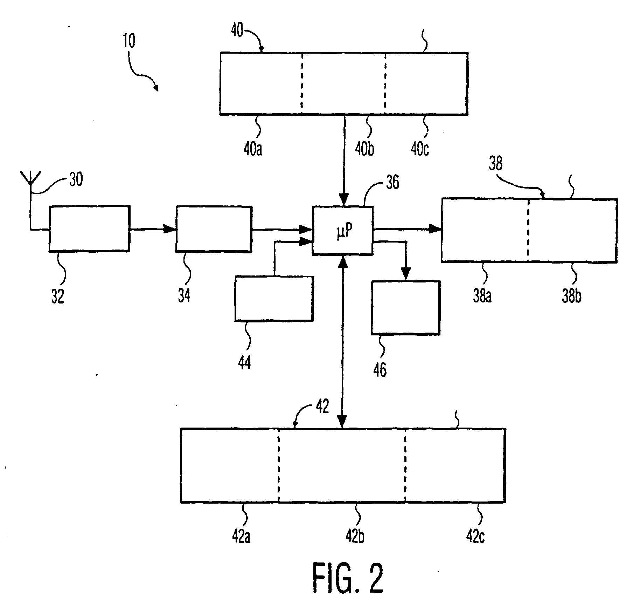

The internal circuitry of pager 10 is shown in Figure 2, and includes an RF receiver and detector section 32 which receives broadcast RF paging signals from antenna 30 in a predetermined standard frequency band. The received paging signals, which are formatted in accordance with a predetermined paging protocol, e.g. FLEX (a trademark of Motorola) or APOC, are decoded in decoder 34, and provided to microprocessor 36 as pages. Microprocessor 36 provides a bitmap to LCD driver section 38a of LCD display system 38 which controls LCD display section to display alphanumeric characters and/or icons indicative of messages or pages, configuration states of pager 10, or other data such as the time, alarms or canned messages.

As is conventional, the pages include address or identification code portions which the microprocessor examines to determine if the page is intended for pager 10 or the pager has the right to extract the message data therein, by comparing them to addresses or identification codes stored generally in section 40c of nonvolatile memory system 40 which microprocessor 36 has read only access to. Memory section 40c is typically implemented as an EEPROM so that the addresses or identification codes can be programmed therein when the pager is issued to the user. Nonvolatile memory system 40 further includes a section 40a for the programs and program related data used by the microprocessor, and a section 40b for font and icon data indicating for a fundamental rectangular array of pixels making up each particular character or icon, which pixels are black and which are white. Canned messages (not shown) may also be stored in nonvolatile memory system 40. Memory system sections 40a and 40b are typically implemented as ROMs, the programs and data stored therein constituting firmware.

In determining whether pager 10 has authority to extract a received, detected and decoded message, microprocessor 36 examines message fields specifically provided for addresses or identification codes, as well as data in extended address fields or predetermined message data fields in accordance with the particular standard paging protocol utilized. The addresses or identification codes of messages which the pager 10 has access rights to include at least one or more assigned to pager 10 exclusively, possibly one or more for messages directed to a group of pagers or users, and possibly one or more for mail-drop subscription services of messages pertaining to news, sports, weather, stocks, etc, respectively, which are essential assigned to the information provider.

Microprocessor 36 has read/write access to a volatile memory system or RAM 42, which includes a section 42a for system configuration data indicating among other things the instantaneous system configuration states of pager 10, a section 42b for message data extracted by microprocessor 36 from received, detected and demodulated messages which it determines pager 10 has the right to extract, and also a section 42c which contains a table indicating on an address by address basis, the display configuration to be used for message data contained in messages having that address. The message specific display configuration includes notably whether or not the display is to be zoomed. i.e. whether multiline or single line mode is to be used, and may include other information. such as the particular font or character set to be used.

The microprocessor also receives input from keys 44. which refers collectively to "menu" key M, "select" key S, and "do" key D, and controls a conventional alert means 46 including flashing light (not shown), speaker (not shown) as for producing a beeping noise, and vibrator (not shown) which are selectively used to alert the user to a received message or a programmed alarm, in dependence on the instantaneous system configuration states indicated by the data stored in memory section 42a.

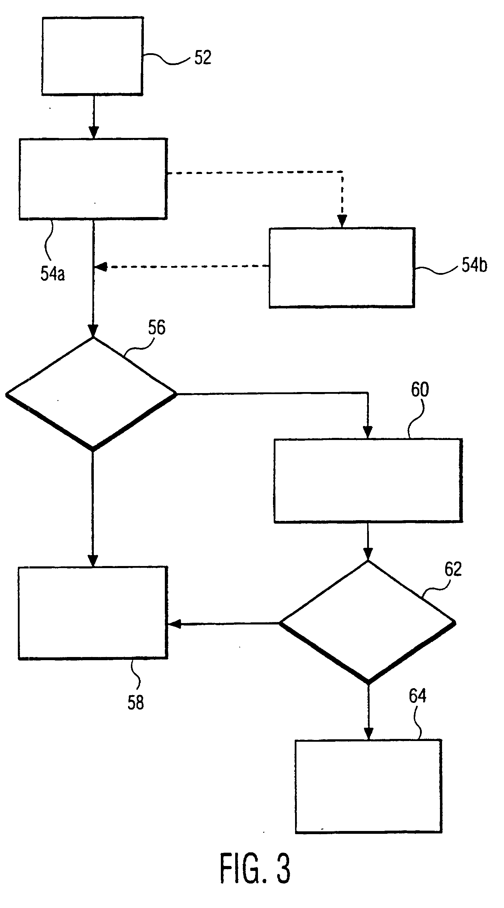

The operation of pager 10 in relation to the selection of a zoom state for displaying a message will be best understood with reference to the flowchart shown in Figure 3, which indicates steps performed by microprocessor 36 under program control. Therein, firstly in step 52 a message or page is received or a desired message or page number is recalled from memory section 42b by suitable manipulation of at least on of keys 44, in particular "do" key D. Then, in step 54a, memory section 42a is checked to determine the system display configuration, and memory section 42b is checked using the address or identification information of the message from which the message data was extracted as an index to determine if there is a stored display configuration therefor. The system display configuration is utilized as a default unless a message specific display configuration is stored in memory section 42c for the address or identification code associated with the particular address, in which case the message specific display configuration is used. Further, the system display configuration may be changed by the user at any time in step 54b utilizing keys 44. An illustrative manipulation of keys 44 for such purpose include actuation of "menu" key M until a "ZOOM IN/OUT" display appears with icons such as "+" and "-" indicating zoom in or out direction which icons are selectable in response to actuation of the "select" key, and then actuation of the "do" key with respect to the selected zoom direction.

Execution of the display control procedure branches at step 56 in dependence on whether the multiline mode or single line mode for a particular message has been determined in the preceding steps 54a, 54b on a system basis by default, or based upon the message. When the multiline mode is to be used, then step 58 is reached wherein to view a long message vertical line advance is implemented in response to user actuation of one or more of keys 44, such as "do" key D. Preferably, for good readability, in response to each actuation of "do" key D the message is instantaneously advanced by as many lines as there are on the display. If desired, an advance of the message by a single line may be implemented in response to each actuation of one of keys 44 to achieve a vertical scrolling effect.

When, on the other hand, the single line mode is to be used, execution of the procedure branches from step 56 to a step 60 wherein either a horizontal scroll speed is selected or line by line vertical advance is selected. The selection is made by appropriate manipulation of keys 44. For example, actuation of the "menu" key may cause the display of a "SCROLL SPEED" menu including icons representing slow, medium or fast continuous horizontal character by character scrolling, or line by line vertical advance. The icons are navigated between by actuation of the "select" key S, and a selected icon corresponding to a desired horizontal scrolling speed or to vertical line by line advance is chosen by actuation of the "do" key D.

Execution of the display control procedure branches in dependence upon whether a horizontal scrolling speed or vertical line by line advance has been selected in step 60 for the single line mode. If line by line advance has been chosen, then step 58 is reached where the message is caused to advance instantaneously by one line in response to each actuation of a particular one of keys 44, specifically the "do" key. If however a horizontal scrolling speed has been chosen in step 60, then the branching causes step 64 to be reached in which continuous horizontal character by character scrolling at the chosen speed is controlled in response to actuation of one or more of keys 44. Preferably, a toggle between a stationary paused state and a horizontal scrolling state of the displayed message is implemented in response to sequential actuations of a single one of keys 44, such as the "do" key D. Thus pressing "do" key D when the message is in a stationary paused state causes horizontal scrolling to start or begin, whereas pressing "do" key D when the message is scrolling continuously horizontally at the chosen speed will pause the horizontal scrolling so that a displayed portion of the message is stationary.

Memory section 42c is preferably programmable by the user by a procedure employing key actuations and menus similar to those used in step 54b after cycling through each different source type of message in response to actuation of an appropriate one or more of keys 44. Alternatively, the zoom configuration for each address may be programmed into nonvolatile memory system 40 when authorized addresses or identification codes are programmed therein.

It should be appreciated that the objects of the present invention have been satisfied by providing a pager whose display configuration can be chosen on a system or message basis.

While the present invention has been described in particular detail, it should also be appreciated that numerous modifications are possible within the intended spirit and scope of the invention. For example, the specific display configuration for particular messages may be stored with or appended to the messages.

## Claims

1. A wireless communication device comprising :
means (30, 32, 34) for receiving and demodulating an RF signal, and for decoding messages from the received and demodulated RF signal, which messages contain at least one address or identification code and associated message data corresponding to a series of characters to be displayed;
memory means (40, 42) for storing one or more addresses or identification codes with respect to which the wireless communication device is authorized to extract associated message data; and
means (36) for extracting from the decoded messages the series of characters corresponding to message data associated with the stored addresses or identification codes;
a display means (38) having a plurality of different display modes for display of at least a portion of the series of characters at a time, each display mode providing a different appearance of a displayed series of characters; and
means(36, 38a) for controlling said display means to display the series of characters extracted from a message;
wherein said memory means (40, 42) is for storing a plurality of different addresses or identification codes with respect to which the pager is authorized to extract associated message data, and for storing message configuration information indicating respective display modes in correspondence with said different addresses or identification codes, and wherein said display controlling means (36, 38a) is configured for causing selective display of the extracted message data in a display mode selected in dependence upon the stored message configuration information associated with the address or identification code of the message containing the extracted message data.

2. The device as claimed in Claim 1, wherein said display means (38) has a multiline display mode and a single line display mode for display of at least a portion of the series of characters at a time.

3. The device as claimed in Claim 1, wherein said display controlling means (36, 38a) is configured for causing selective display of at least a portion of the extracted series of characters at a time in either said multiline mode or said single line mode, and for selective horizontal character by character scrolling of the displayed portion of the extracted series of characters under the control of a user when displayed in a single line mode.

4. The device as claimed in Claim 3, wherein said user control of horizontal character by character scrolling includes start/continue and pause functions (64).

5. The device as claimed in Claim 3, wherein said user control of horizontal character by character scrolling includes a single key (D) toggling between start/continue and pause functions.

## Patentansprüche

1. Drahtlose Kommunikationsanordnung, welche die nachfolgenden Elemente umfasst:
- Mittel (30, 32, 34) zum Empfangen und Demodulieren eines HF-Signals und zum Decodieren von Nachrichten aus dem empfangenen und demodulierten HF-Signal, wobei diese Nachrichten wenigstens eine Adresse oder einen Identifikationscode und assoziierte Nachrichtendaten entsprechen einer Reihe wiederzugebender Schriftzeichen enthalten,
- Speichermittel (40, 42) zum Speichern einer oder mehrerer Adressen oder Identifikationscodes in Bezug auf wer für die drahtlose Kommunikationsanordnung autorisiert ist, assoziierte Nachrichtendaten zu extrahieren; und
- Mittel (36) zum aus den decodierten Nachrichten Extrahieren der Reihe mit Schriftzeichen entsprechend den Nachrichtendaten, die mit den gespeicherten Adressen oder Identifikationscodes assoziiert sind;
- Wiedergabemittel (38) mit einer Anzahl verschiedener Wiedergabemoden zur Wiedergabe wenigstens eines Teils der Reihe mit Schriftzeichen gleichzeitig, wobei jede Wiedergabemode ein anderes Aussehen einer wiedergegebenen Reihe von Schriftzeichen liefert; und
- Mittel (36, 38a) zur Steuerung der genannten Wiedergabemittel zum Wiedergeben der Reihe mit Schriftzeichen, die aus einer Nachricht extrahiert worden sind;
wobei die genannten Speichermittel (40, 42) vorgesehen sind zur Speicherung einer Anzahl verschiedener Adressen oder Identifikationscodes in Bezug auf wer für die drahtlose Kommunikationsanordnung autorisiert ist, assoziierte Nachrichtendaten zu extrahieren und zur Speicherung von Nachrichtenkonfigurationsinformation, welche die betreffende Wiedergabemoden entsprechend den genannten verschiedenen Adressen oder Identifikationscodes angeben, und wobei die genannten Wiedergabesteuermittel (36, 38a) derart vorgesehen sind, dass sie eine selektive Wiedergabe der extrahiertenNachrichtendaten in einer Wiedergabemode verursachen, die in Abhängigkeit von der gespeicherten Nachrichtenkonfigurationsinformation selektiert worden ist, die mit der Adresse oder dem Identifikationscode der Nachricht mit den extrahierten Nachrichtendaten assoziiert ist.

2. Anordnung nach Anspruch 1, wobei das genannte Wiedergabemittel (38) eine mehrzeilige Wiedergabemode und eine einzelzeilige Wiedergabemode zur gleichzeitigen Wiedergabe wenigstens eines Teils der Reihe mit Schriftzeichen aufweist.

3. Anordnung nach Anspruch 1, wobei das genannte Wiedergabesteuermittel (36, 38a) dazu vorgesehen ist, eine selektive Wiedergabe wenigstens eines Teils der extrahierten Reihe mit Schriftzeichen gleichzeitig entweder in der genannten Mehrzeilenmode oder in der genannten Einzelzeilenmode und einen selektiven horizontalen Schriftzeichendurchlauf des wiedergegebenen Teils der extrahierten Reihe mit Schriftzeichen zu versorgen, und zwar unter Ansteuerung eines Benutzers, wenn in einer Einzelzeilenmode wiedergegeben.

4. Anordnung nach Anspruch 3, wobei die genannte Benutzersteuerung des horizontalen Schriftzeichendurchlaufs die Start/Fortsetzungs- und Pausefunktionen (64) umfasst.

5. Anordnung nach Anspruch 3, wobei die genannte Benutzersteuerung des horizontalen Schriftzeichendurchlaufs eine Einzeltastenberührung (D) zwischen Start/Fortsetzungs- und Pausefunktionen umfasst.

## Revendications

1. Dispositif de communication sans cordon comprenant:
des moyens (30, 32, 34) pour recevoir et pour démoduler un signal RF, et pour décoder des messages en provenance du signal RF reçu et démodulé, lesquels messages contiennent au moins une adresse ou un code d'identification et des données de message connexes correspondant à une série de caractères à afficher;
des moyens de mémoire (40, 42) pour mémoriser une ou plusieurs adresses ou codes d'identification par rapport auxquels le dispositif de communication sans cordon est autorisé d'extraire des données de message connexes; et
des moyens (36) pour extraire, des messages décodés, la série de caractères correspondant à des données de message qui sont connexes aux adresses ou aux codes d'identification mémorisés;
des moyens d'affichage (38) ayant une pluralité de modes d'affichage. différents pour l'affichage d'au moins une portion de la série de caractères à la fois, chaque mode d'affichage fournissant un aspect différent d'une série affichée de caractères; et
des moyens (36, 38a) pour commander lesdits moyens d'affichage pour afficher la série de caractères qui sont extraits d'un message;
dans lequel lesdits moyens de mémoire (40, 42) sont destinés à mémoriser une pluralité d'adresses différentes et de codes d'identification différents par rapport auxquels le récepteur d'appel de radiomessagerie est autorisé d'extraire des données de message connexes, et à mémoriser des informations de configuration de message indiquant des modes d'affichage respectifs conformément audites adresses ou audits codes d'identification différents et dans lequel les moyens de commande d'affichage (36, 38a) sont configurés de manière à effectuer un affichage sélectif des données de message extraites dans un mode d'affichage qui est sélectionné dépendamment des informations de configuration de message mémorisées étant associées aux informations d'adresse ou de code d'identification du message contenant les données de message extraites.

2. Dispositif selon la revendication 1, dans lequel lesdits moyens d'affichage (38) présentent un mode d'affichage à lignes multiples et un mode d'affichage à ligne unique pour l'affichage d'au moins une portion de la série de caractères à la fois.

3. Dispositif selon la revendication 1, dans lequel lesdits moyens de commande d'affichage (36, 38a) sont configurés de manière à effectuer un affichage sélectif d'au moins une portion de la série extraite de caractères à la fois soit dans ledit mode à lignes multiples, soit dans ledit mode à ligne unique, et pour le défilement horizontal de caractère par caractère de la portion affichée de la série extraite de caractères sous la commande d'un utilisateur dans le cas d'un affichage dans un mode à ligne unique.

4. Dispositif selon la revendication 3, dans lequel ladite commande d'utilisateur de défilement horizontal de caractère par caractère renferme des fonctions de départ/continuation et de pause (64).

5. Dispositif selon la revendication 3, dans lequel ladite commande d'utilisateur de défilement horizontal de caractère par caractère renferme un basculement à touche unique (D) entre des fonctions de départ/continuation et de pause.
